# EUROPEAN PATENT SPECIFICATION

(11) **EP 0 432 753 B1**
(45) Date of publication and mention of the grant of the patent: **19.04.1995**
(21) Application number: 90123941.8
(22) Date of filing: 12.12.1990
(51) Int. Cl.: F02C 9/28

(54) **Speed stabilization apparatus for two shaft gas turbine**
Einrichtung zur Stabilisierung der Drehzahl der Arbeitsturbine bei einer Gasturbinenanlage
Dispositif de stabilisation de la vitesse d'une turbine libre pour un système de turbine à gaz

(30) Priority: 12.12.1989 JP 322255/89
(43) Date of publication of application: 19.06.1991
(73) Proprietor: EBARA CORPORATION, Ohta-ku, Tokyo (JP)
(72) Inventor: Kobayashi, Toshimitsu, Yokohama-shi, Kanagawa-ken (JP); Oda, Koji, Onomichi-shi, Hiroshima-ken (JP); Saigusa, Athusi, Tokyo (JP)
(74) Representative: Wagner, Karl H., Dipl.-Ing.

(56) References cited:
- US-A- 4 184 083
- US-A- 4 185 203

## Description

The present invention relates to a speed stabilization apparatus for use in a two shaft gas turbine, and more particularly to a speed stabilization apparatus for use in a two shaft gas turbine which can improve load charging dip characteristics; that is a momentarily reduction of a rotational speed of a generator when a charging load is additionally connected to an output of the generator.

Attention is drawn to US-A-4 184 083 which relates to a closed loop rotational speed control system for a prime mover of an electric generator. According to said document a valve opens as a result of increasing a set rotational speed of the turbine. Accordingly, the timing of forcibly opening the valve is delayed from when the load charging command is generated.

A well-known two shaft gas turbine employs a compressor driving shaft connected to a compressor driving turbine for driving a compressor, and a load driving shaft connected to an output turbine for driving a generator which is a load of the turbine, wherein these shafts are driven independently. Such a two shaft gas turbine usually incorporates a governer as a speed stabilization means. The governer is so designed that it responds to a rotational speed signal representing a rotational speed of the load driving shaft, and opens a fuel valve by a suitable degree when the rotational speed of the load driving shaft is lowered, so as to increase the amount of combustion gas supplied to the turbine from a combustor thereby causing an increase in the speed of the turbine, while when the rotational speed of the load driving shaft is increased it closes the fuel valve by a suitable degree so as to reduce the amount of combustion gas, thereby causing a decrease in the speed of the turbine. In this manner, the governer can stabilize the variation of the rotational speed of the generator resulting from a change in the electrical load to be connected to an output of the generator, and hence the output frequency of the generator can be stabilized.

According to the generator driven by the two shaft turbine provided with a speed stabilization apparatus comprised of the conventional governer mentioned above, since the compressor driving shaft is in principle independent of the load driving shaft, if a basic load normally charged to the generator is light, the compressor driven by the compressor driving shaft is caused to rotate at a speed much below that of the output turbine for the generator driven by the load driving shaft the speed of which is directly regulated by the governer so that the rotational speed of the generator is maintained at a level equal to that of the generator charged a rated load, whereby a highly efficient operation may be ensured at the time of light loading.

Conversely, when a large amount of load is additionally charged to the light basic load, the governer is activated to regulate the speed in response to the reduction of the rotational speed of the load driving shaft. In this case, since the compressor is rotated at a low speed and little air is supplied from the compressor to the combustor, even if the fuel valve is opened quickly, the combustion gas will not be actively supplied from the combustor so quickly. Thus, the rotational speed of the load driving shaft cannot be immediately returned to the previous higher speed and as a consequence a load charging dip may be caused in the rotational speed at the time of high load charging.

It is conceivable, in order to solve this load charging dip problem, to employ a single shaft gas turbine adapted to drive a compressor and a generator with one shaft. According to the single shaft gas turbine, since the compressor is driven by the same driving shaft the rotational speed of which is governed to be at a constant and fixed speed even against a light basic load, and thus the compressor will not rotate at a reduced rotational speed at the time of light loading, an immediate response of the compressor may be secured and no or little load charging dip will be experienced. On the contrary, however, a high efficiency under a light basic load or partial load charging, cannot be anticipated. In view of the contradictory problems in terms of immediate response and high efficiency with regard to the two shaft gas turbine and the single shaft gas turbine, there has been a demand for a speed stabilization apparatus for a two shaft gas turbine which is capable of simultaneously solving both the above problems.

It is an object of this invention to provide a speed stabilization apparatus for use in a two shaft gas turbine which avoids a load charging dip even when an excessive load is charged on a light normal basic load.

This object is achieved by a speed stabilization apparatus for a two shaft gas turbine comprising; means for delay-charging loads by predetermined time durations when load charging command signals for the respective charging loads are generated, and means for supplying a signal to a governer to forcibly and fully open a fuel valve for a predetermined period in response to the generation of the respective load charging command signals.
Fig. 1 illustrates in block diagram form an embodiment of the present invention;
Figs. 2(A) - 2(G) show wave forms of signals at the essential parts in the embodiment shown in Fig. 1;
Fig. 3 illustrates a second embodiment of the present invention;
Fig. 4 is a block diagram showing the internal constitution of the load charging dip restriction unit B' in the second embodiment shown in Fig. 3;
Figs. 5(A) - 5(G) show wave forms of signals at the essential parts in the dip restriction unit B' shown in Fig.4;
Fig. 6 shows a characteristic diagram showing a decision criterion with regard to a signal comparison operation for deciding whether or not a fuel valve should be forcibly and fully opened when a load is additionally charged; and
Fig. 7 illustrates a third embodiment of the present invention.

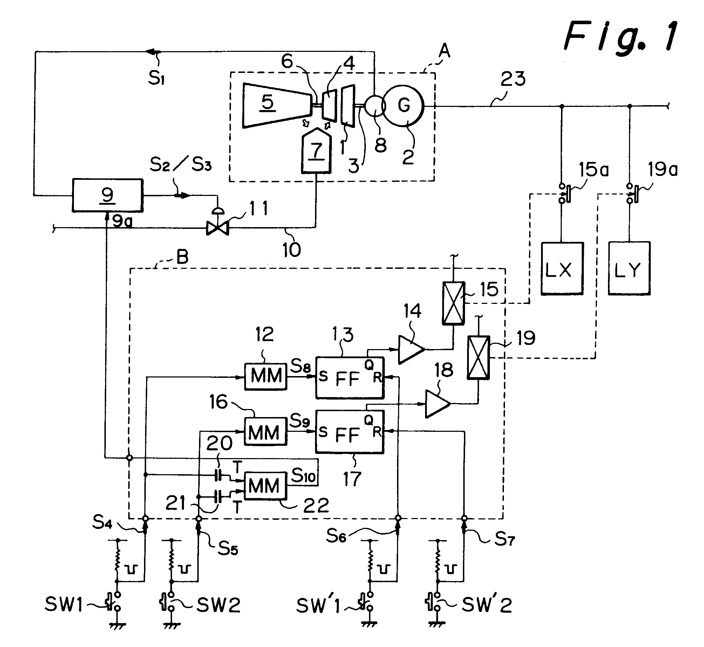

Referring now to Fig. 1, there is shown in block form an embodiment of this invention. In Fig. 1, a two shaft gas turbine unit A is provided with a load driving shaft 3 connected to an output turbine 1 to drive a generator 2 as a load of the turbine 1, and with a compressor driving shaft 6 connected to a compressor driving turbine 4 to drive a compressor 5. These shafts 3 and 6 are rotated independently of each other by the respective turbines 1 and 4. A combustor 7 incorporated in the turbine unit A adjacent to the compressor driving turbine 4 is supplied with air from the compressor 5 and provides a combustion gas to the output turbine 1 through the compressor driving turbine 4. The load driving shaft 3 is also connected to a rotational speed detecting module 8, such as a tacho-generator driven with the generator 2, an electro-magnetic pick-up, or the like.

The rotational speed detecting module 8 detects a rotational speed of the load driving shaft 3 and provides a rotational speed signal S₁ to a governer 9. The governer 9, in turn, supplies a normal valve control signal S₂ to a fuel valve 11 in response to the received signal S₁, or rotational speed of the shaft 3. The valve is disposed at a fuel supply pipe 10 extending to the combustor 7, and is controlled to be opened and closed by suitable degrees in accordance with the valve control signal S₂.

In the unit A, the combustor 7 is supplied with air from the compressor 5 and the fuel delivered via the fuel supply pipe 10 is combusted therein, whereby the combustion gas is supplied through the compressor driving turbine 4 to the output turbine 1. In this way, the generator 2 and the compressor 5 are driven by the two independent driving shafts 3 and 6 at different rotational speeds.

In this instance, when the rotational speed of the generator 2 is lowered due to the increase of electric charging loads, the rotational speed signal S₁ from the tacho-generator 8 will be correspondingly reduced, so that the governer 9, in response thereto, will output the valve control signal S₂ to cause the fuel valve 11 to be opened. Accordingly, the rotational speed of the generator 2 may be restored to the previous level. Conversely, when the rotational speed of the generator 2 is increased due to reduction of the electric charging loads, a reverse operation to the afore-said operation will be executed, so as to restore the rotational speed of the generator 2 to the previous level. Accordingly the rotational speed of the generator 2 may be stabilized.

The above-mentioned two shaft gas turbine unit A with the governer 9 and their cooperation are well known.

In Fig. 1, a load charging dip restriction unit B includes mono-stable multi-vibrators 12 and 16, as load charging delay means, input terminals of which are connected to receive signals S₄ and S₅ generated by turning on load charging command switches SW1 and SW2, R-S flip-flops 13 and 17, the set terminals (S) of which are respectively connected to receive output signals S₈ and S₉ from the multi-vibrators 12 and 16 and reset terminals (R) of which are respectively connected to receive signals S₆ and S₇ generated by turning-on load release command switches SW'1 and SW'2, and relays 15 and 19 connected to receive output signals from the positive phase output terminals (Q) of the flip-flops 13 and 17 through buffer amplifiers 14 and 18. The multi-vibrator 12, flip-flop 13 and relay 15 constitute load charging delay means for charging load LX, while the multi-vibrator 16, flip-flop 17 and relay 19 constitute load charging delay means for charging load LY.

The relays 15 and 19 have make contacts, or normally-open contacts 15a and 19a connected between an output bus 23 of the generator 2 and the charging loads LX and LY.

The dip restriction unit B further includes a mono-stable multivibrator 22 as valve forcible opening command means, which receives trigger signals through capacitors 20 and 21 when the respective switches SW1 and SW2 are closed, and outputs a valve forcible opening command signal S₁₀ to an interrupt control terminal 9a of the governer 9.

In this embodied unit B, the multi-vibrators 12, 16 and 22 are triggered at falling edges of their input pulses and their output signals S₈, S₉ and S₁₀ then change signal levels for time periods T1X, T1Y and T2. The flip-flops 13 and 17 are triggered at rising edges of their input signals.

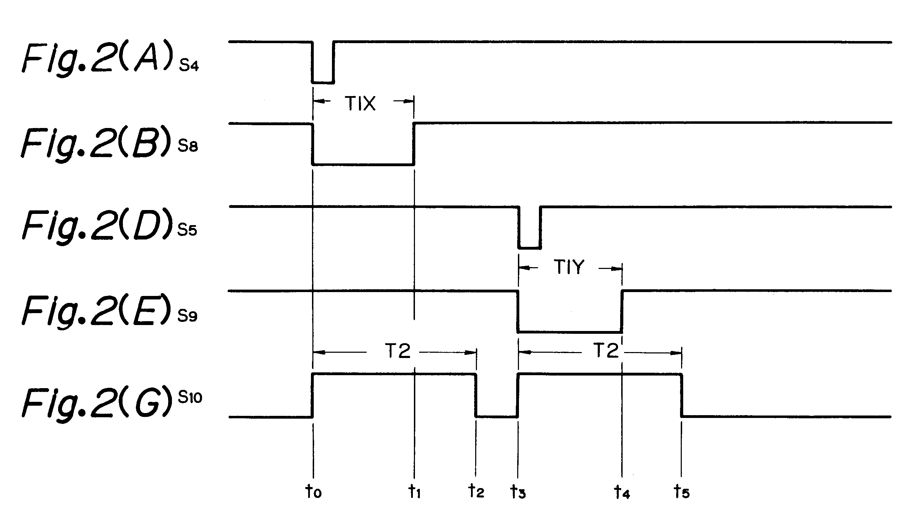

Operation of the apparatus shown in Fig. 1 will next be explained by referring to Fig. 2.

Assuming both of the charging loads LX and LY have been disconnected, since the switches SW1, SW2, SW'1 and SW'2 are normally open types, the levels of the signals S₄ through S₇ are normally high.

When the switch SW1 is turned-on (t = t₀), the signal S₄ becomes the earth level as shown in Fig. 2(A) and thereby the multi-vibrator 12 is changed to the metastable (quasistable) condition so that its output signal S₈ drops to a low level as shown in Fig. 2(B). When the time duration TIX, which is set at the multi-vibrator 12 to stipulate a delay time for delay-charging the load LX, passes away (t = t₁), the multi-vibrator 12 returns again to the stable condition, and in turn the flip-flop 13 which has been at a low level up to this time is set to output the high level from the Q terminal. This high level signal is then amplified by the buffer amplifier 14, whereby the relay 15 is energized at the time t₁ to close the make contact 15a. Accordingly, the load LX is connected to the bus 23 to be supplied with power from the generator 2.

At t = t₀, the multi-vibrator 22 also receives through the capacitor 20 a trigger pulse, which is generated by operation the switch SW1, to change its output signal S₁₀ to the high level during the time period T2, which has been set thereat and is longer than the time period T1X set at the multi-vibrator 12, as shown in Fig. 2(G). The high level signal from the multi-vibrator 22 is then supplied to the interrupt control terminal 9a of the governer 9, thereby the governer 9 preferentially provides a forcible opening valve control signal S₃ to the fuel valve 11 during the time period T2 by interrupting the normal valve control signal S₂. In other words, the forcible opening valve signal is directly supplied through the governer 9 to the fuel valve 11, whereby the valve 11 is kept in a fully opened condition throughout the time period T2 (from t₀ to t₂).

Eventually, if the charging load LX is to be charged, the load LX will be charged at the time delayed by the time duration T1X subsequent to the command operation for the load charging, and the fuel valve will be kept in the fully opened condition during the time duration T2 longer than the time duration T1X. Accordingly, since the load LX is charged after the compressor driving turbine 4 and hence the compressor 5 have attained an adequate rotational speed owing to the gas supplied from the combustor 7 activated by the fuel supplied via the fully opened fuel valve 11 during the load charging delay time period T1X, and the fuel valve 11 is continuously kept in the fully opened condition for the time period (= T2 - T1X) after the load LX is charged, the dip of the rotational speed of the generator at the time of or immediately after charging of the load may be restricted.

When the operation switch SW2 is turned-on (t = t₃) so as to charge the load LY, the command signal S₅ is supplied to the multi-vibrator 16, as shown in Fig. 2(D). After the lapse of the period T1Y, at t = t₄, the flip-flop 17 is reversed to the set condition by the signal S₉ shown in Fig. 2(E) from the multivibrator 16, to output the high level signal, so that the relay 19 is activated to connect the load LY to the output bus 23 of the generator 2 by way of the make contact 19a.

At t = t₃, the multi-vibrator 22, which returned to the normal condition at t = t₂, receives a trigger pulse from the switch SW2 through the capacitor 21 to change the output signal S₁₀ to high and maintain the high level during the time period T2 as shown in Fig. 2(G). Accordingly, in the similar manner to the case of the charging of the load LX, the forcible opening valve signal S₃ is supplied to the valve 11 to fully open it again from t₃ to t₅.

In the above state, when the load releasing switch SW'1 or SW'2 is momentarily turned-on, the load releasing command signal S₆ or S₇ is provided to the reset terminal (R) of the flip-flop 13 or 17 to change its output to the low level. The relay 15 or 19 is thus disenergized and then the load LX or LY is disengaged from the power supply bus 23.

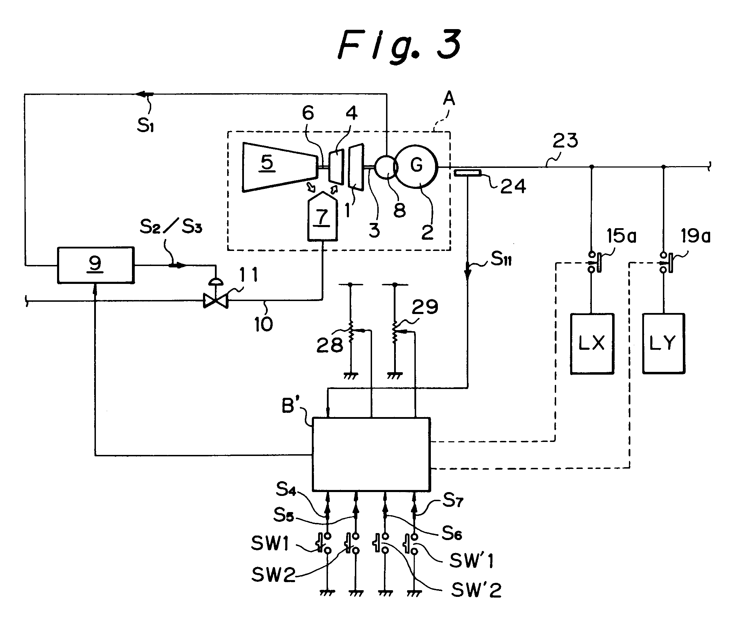

Fig. 3 illustrates another embodiment of this invention, wherein a basic load measuring sensor 24 and two potentiometers 28 and 29 are additionally incorporated into the first embodiment shown in Fig. 1 and the constitution of a load charging dip restriction unit B' is different from that of the unit B of the first embodiment. The other elements are the same as those designated by the same symbols in Fig. 1. The basic load measuring sensor 24 comprises a current transformer and a current detector to detect a current flowing through the output bus 23 and provides an output signal S₁₁, corresponding to the detected current value of the basic load, to the unit B'. The potentiometers 28 and 29 are respectively set to output predetermined reference voltages 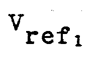
and 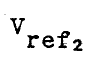
and these voltages are provided to the dip restriction unit B'. These voltages are set in accordance with the load values of the charging loads LX and LY.

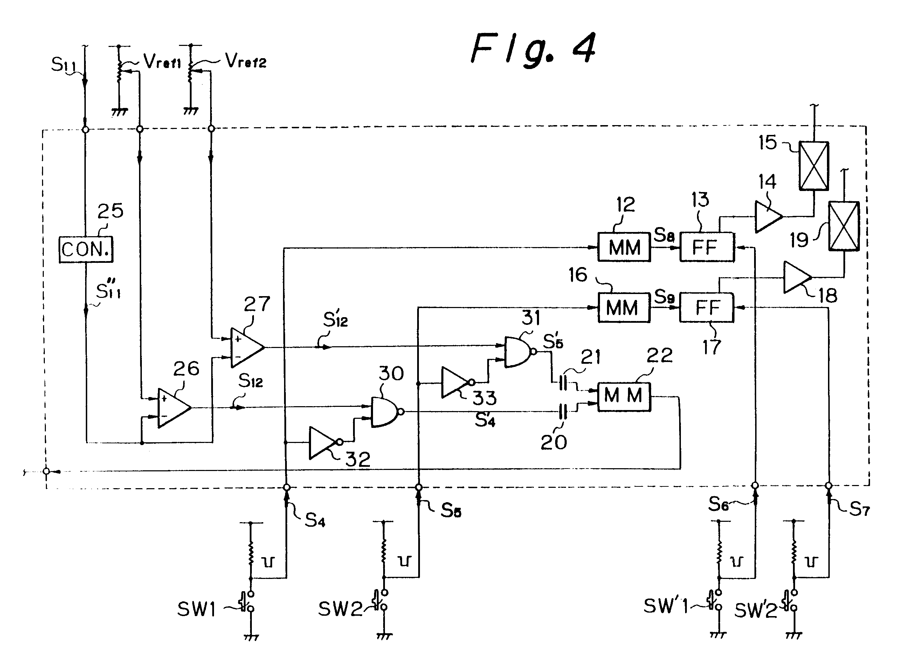

Fig. 4 shows an internal constitution of the unit B', wherein the same elements as in Fig. 1 are designated by the same reference symbols. In this unit B' a signal conditioning circuit 25 is connected to receive the signal S₁₁ output from the basic load measuring sensor 24 and provides an output signal S''₁₁ to input terminals of comparators 26 and 27, the other input terminals of which are respectively provided with the reference voltages 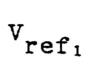
and 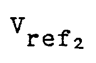
from the potentiometers 28 and 29.

Output terminals of the comparators are respectively connected to input terminals of NAND gates 30 and 31, the other input terminals of which are connected to the load charging command switches SW1 and SW2 through inverters 32 and 33 respectively, and output terminals of which are connected to the multi-vibrator 22 via the respective capacitors 20 and 21.

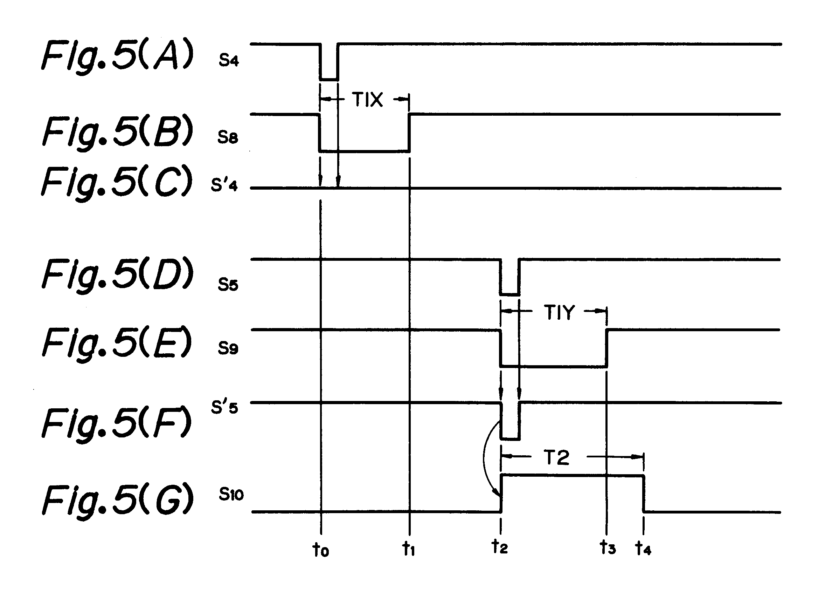

Operation of the second embodiment will be described by referring to Fig. 5.

In the similar manner to the first embodiment, when the switch SW1 or SW2 is momentarily closed, the load LX or LY is supplied with power from the generator 2 through the bus 23 after the time duration T1X or T1Y, and when the switch SW'1 or SW'2 is turned-on, the load LX or LY is immediately disconnected from the bus 23.

Considering that the switch SW1 is closed, the low level signal S₄ is inverted by the inverter 32 and then the NAND gate 30 receives the high level signal from the inverter, whereby the gate 30 can inversely transmit a signal S₁₂ from the comparator 26 only when the switch SW1 is closed. The potentiometor 28 has been set to provide the reference voltage 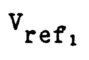
so as to correspond the resistance value of the load or a value proportional thereto (typically, the rate (%) of the resistance value of the load LX to the summing resistance value of the whole loads to be connected to the bus 23), while the signal conditioning circuit 25 generates the signal S''₁₁ having a DC voltage corresponding to the resistance value of the basic load or a value proportional thereto (typically, the rate (%) of the resistance value of the basic load to the summing resistance value of the whole loads), obtained by signal-conditioning the signal S₁₁ output from the basic load measuring sensor 24.

The level of the signal S''₁₁ generated from the circuit 25 is compared with the reference voltage 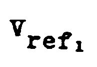
at the comparator 26, and if the latter 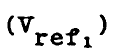
is larger than the former (S''₁₁), that is, the charging load LX is considerably larger than the normal basic load with respect to their resistance values, the signal S₁₂ output from the comparator 26 is the high level. The NAND gate 30, which also receives the high level signal from the inverter 32 at t = t₀, then outputs a signal S'₄ having the low level (not shown in Fig. 5(C)) to the multi-vibrator 22 through the capacitor 20, whereby the vibrator 22 changes its output signal S₁₀ to high during the time period T2. Accordingly, the forcible opening valve control signal S₃ is directly provided through the governer 9 to the valve 11 to fully open it, in the similar manner to the first embodiment.

Conversely, if the reference voltatge 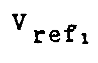
is smaller than the signal S''₁₁, the signal S₁₂ output from the comparator 26 is low and then the NAND gate 30 maintains the high level of the signal S'₄ as shown in Fig. 5(C) even when the switch SW1 is closed at t = t₀. Therefore, the multi-vibrator 22 is not triggered and thus the forcible opening valve control signal S₃ is not supplied through the governer 9 to the valve 11.

Similarly, when the command switch SW2 is momentarily closed as shown in Fig. 5(D), and only when the signal S''₁₁ generated from the conditioning circuit 25 is smaller than the reference voltage 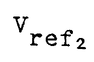
set at the potentiometer 29, the forcible-opening valve signal S₃ is directly provided through the governer 9 to the valve during the time period T2 which is the metastable time period of the multi-vibrator 22 (shown in Fig. 5 (G)).

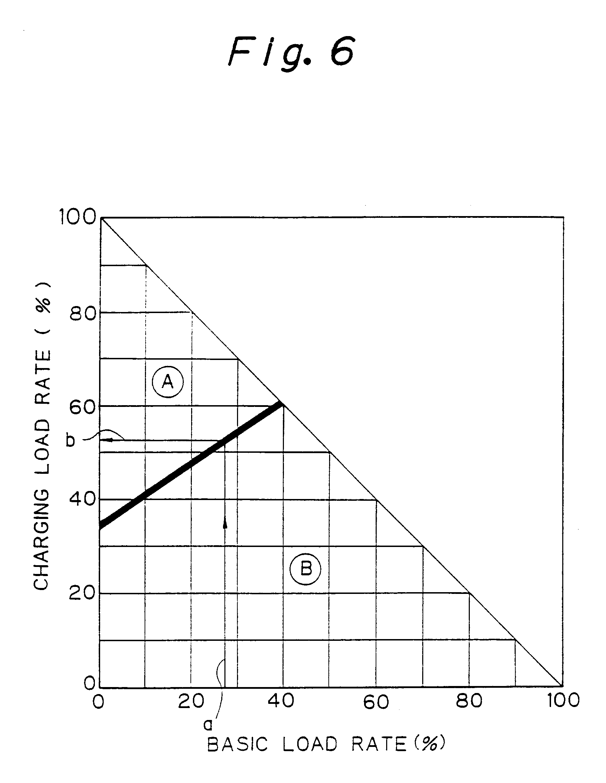

Fig. 6 illustrates a graph showing a criterion of deciding the signal comparison operation in respect of the basic load rate (%) and the charging load rate (%). In the graph, the abscissa represents the former and the ordinate represents the latter.

In the graph, assuming the basic load rate to be 27% as designated by the auxiliary line a in the vertical direction, the critical charging load rate at which the valve should be forcibly opened is 53% as designated by the lateral auxiliary line b. Accordingly, the combinations of the basic load rate and the charging load rate which define the area A in the graph will need to stabilize the rotational speed by forcibly opening the fuel valve, while the combinations thereof which define the area B in the graph may be supposed to cause a slight dip due to the load charging and thus a normal governing operation may provide a stable speed without applying the forcible opening valve means.

Although the boundary line between the areas A and B may be different depending on individual situations, a desired boundary line may be realized to a reasonable extent by setting the reference voltages at the potentiometers 28 and 29 in accordance with such situations.

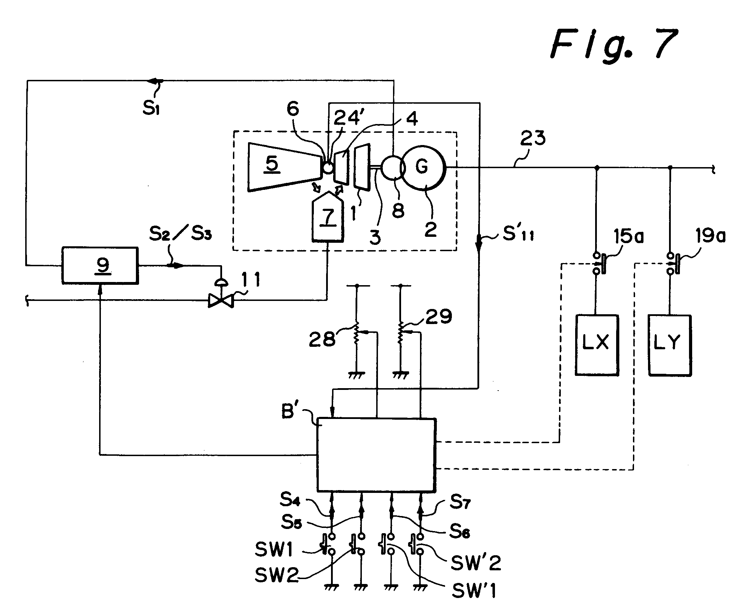

Fig. 7 shows an embodiment alternative to the second embodiment shown in Fig. 3. In this third embodiment, in place of the basic load measuring sensor 24, a compressor rotational speed measuring sensor 24' for detecting the rotational speed of the compressor 5 is imposed at the rotational shaft 5 for driving the compressor. Further, in this embodiment, the potentiometers 28 and 29 are set specified constant values corresponding to threshold rotational speeds of the compressor for the respective charging loads instead of the charging load value or its corresponding value as set in the second embodiment. Accordingly, so long as the compressor 5 is driven at a low rotational speed below the specified threshold rotational speed with a light load charging, the generator 2 may be stabilized by forcibly opening the fuel valve 11.

In the embodiments described above, since the mono-stable multi-vibrators 12, 16, and 22 are employed as time duration signal generating means, it is obvious to use any other circuits, for example delay circuits operable to output such signals in response to any trigger signals.

Having described specific embodiments of our bearing, modification and variation of our invention is possible within the scope of the invention as defined by the claims.

## Claims

1. A speed stabilization apparatus for stabilizing a rotational speed of a two shaft gas turbine system (A) including a generator (2) connectable to at least one charging load (LX, LY), a load driving shaft (3) coupled with an output turbine (1) for driving said generator (2), a compressor (5), a compressor driving shaft (6) coupled with a compressor driving turbine (4) for rotating said compressor (5), and a combustor (7) adapted to be supplied with fuel through a fuel pipe (10) having a fuel valve (11) and air from said compressor (5) for supplying fuel gas through said compressor driving turbine (4) to said output turbine (1);
said speed stabilization apparatus comprising;
(a) rotational speed detection means (8) for detecting a rotational speed of said load driving shaft (3) to provide a rotational speed signal (S₁);
(b) governer means (9) in response to said rotational speed signal (S₁) for stabilizing said rotational speed by opening said fuel valve (11) when said rotational speed is decreased and by closing said fuel valve (11) when said rotational speed is increased; and
(c) load charging dip restriction means (B, B') for restricting a load charging dip including:
delay means (12, 16) for providing at least one signal (S₈, S₉) after a first predetermined time period from when at least one load charging command (S₄, S₅) is generated;
charging load connecting means (13-15, 17-19) in response to said signal (S₈, S₉) from said delay means (12, 16) for connecting said charging load (LX, LY) to said generator (2) and in response to at least one load disconnecting command (S₆, S₇) for releasing said charging load (LX, LY) from said generator (2); and
forcible opening valve means (22) for forcibly opening said fuel valve (11) during a second predetermined time period in response to said load charging command (S₄, S₅);
said speed stabilization apparatus is characterized in that:
said forcible opening valve means (22) is connected to said governer means (9) to interrupt a normal valve control signal (S₂) from said governer means, and to provide a forcible opening valve signal (S₃) to fully open said fuel valve (11) immediately when said load charging command (S₄, S₅) is generated.

2. A speed stabilization apparatus according to Claim 1, wherein said load charging dip restriction means (B') further comprises:
basic load measurement means (24) for measuring a basic load value on the basis of an output of said generator (2) to produce a basic load signal (S₁₁ in Figs. 3 and 4) representing said basis load value;
charging load presetting means (28, 29 in Fig. 3) for producing at least one preset charging load signal proportionally representing the value of said charging load (LX, LY); and
forcible opening valve control means (26, 27, 30-33) for preventing said forcible opening valve means (22) from interrupting said normal opening valve control signal (S₂) from said governor means (9) when said preset charging load signal is smaller than said basic load signal (S₁₁), and even when said load charging command is generated.

3. A speed stabilization apparatus according to Claim 1, wherein said load charging dip restriction means (B') further comprises:
presetting means (28, 29 in Fig. 7) for producing at least one preset speed signal representing a rotational speed of said compressor (5) corresponding to the value of said charging load (LX, LY);
second rotational speed detection means (24') coupled with said compressor (5) for producing a compressor rotational speed signal(S'₁₁ in Fig. 7); and
forcible opening valve control means (26, 27, 30-33) for preventing said forcible opening valve means (22) from interrupting said normal opening valve control signal (S₃) from said governor means (9) when said preset speed signal is smaller than said compressor rotational speed Signal, and even when said load charging command is generated.

4. A speed stabilization apparatus according to Claim 2, wherein said forcible opening valve control means comprises at least one comparator (26, 27) for comparing said preset charging load signal with said basic load signal (S₁₁), and at least one logic gate circuit (30 and 32, 31 and 33) in response to the output of said comparator for preventing said load charging command (S₄, S₅) from passing to said forcible opening valve means (22) when said preset charging load signal is smaller than said basic load signal.

5. A speed stabilization apparatus according to Claim 3, wherein said forcible opening valve control means comprises at least one comparator (26, 27) for comparing said preset speed signal with said compressor rotational speed signal (S'₁₁), and at least one logic gate circuit (30 and 32, 31 and 33) in response to the output of said comparator for preventing said load charging command (S₄, S₅) from passing to said forcible opening valve means (22) when said preset speed signal is smaller than said compressor rotational speed signal.

6. A speed stabilization apparatus according to any one of Claims 1-5, wherein said delay means (12, 16) comprises at least one monostable multivibrator which remains in a metastable condition for said first predetermined time period.

7. A speed stabilization apparatus according to Claim 6, wherein said charging load connecting means comprises:
at least one flip-flop (13, 17) connected to receive the output of said monostable multivibrator and to receive said load disconnecting command (S₆, s₇) and
at least one switching means (15 and 15a, 19 and 19a) connected to receive the output of said flip-flop for connecting/disconnecting said charging load (LX, LY) to/from said generator (2).

8. A speed stabilization apparatus according to any one of Claims 1-7, wherein said forcible opening valve means (22) comprises a monostable multivibrator which remains in a metastable condition for said second predetermined time period.

## Patentansprüche

1. Eine Geschwindigkeits- bzw. Drehzahlstabilisierungsvorrichtung zum Stabilisieren einer Drehgeschwindigkeit eines Zweiwellengasturbinensystems (A), das folgendes aufweist:
einen Generator (2), der mit mindestens einer beladenden Last (LX, LY) verbindbar ist, eine Lastantriebswelle (3) gekuppelt mit einer Ausgangsturbine (1) zum Antrieb des Generators (2), einen Kompressor (5), eine Kompressorantriebswelle (6) gekuppelt mit der Kompressorantriebsturbine (4) zum Drehen des Kompressors (5) und eine Verbrennungsvorrichtung (7), geeignet mit Treibstoff versorgt zu werden, und zwar durch eine Treibstoffleitung (10), die ein Treibstoffventil (11) aufweist, und mit Luft vom Kompressor (5), um Treibstoffgas über die Kompressorantriebsturbine (4) an die Ausgangsturbine (1) zu liefern; wobei die Drehzahlstabilisierungsvorrichtung folgendes aufweist:
(a) Drehgeschwindigkeitsdetektionsmittel (8) zum Detektieren einer Dreh- bzw. Rotationsgeschwindigkeit der Lastantriebswelle (3) zum Liefern eines Drehgeschwindigkeitssignals (S₁);
(b) Regler- bzw. Kontrollmittel (9) ansprechend auf das Drehgeschwindigkeitssignal (S₁) zum Stabilisieren der Drehgeschwindigkeit durch das Öffnen des Treibstoffventils (11), wenn die Drehgeschwindigkeit verringert wird und durch Schließen des Treibstoffventils (11), wenn die Drehgeschwindigkeit erhöht wird; und
(c) Lastbeladungsabfallbeschränkungsmittel bzw. Beschränkungsmittel für einen durch Lastbeladung hervorgerufenen Abfall (B, B') zum Beschränken einer Lastbeladungsabfalls, die folgendes aufweisen:
Verzögerungsmittel (12, 16) zum Liefern mindestens eines Signals (S₈, S₉) nach einer ersten vorbestimmten Zeitperiode, wenn mindestens ein Lastbeladungsbefehl (S₄, S₅) erzeugt wird;
Ladungslastverbindungsmittel (13-15, 17-19) ansprechend auf das Signal (S₈, S₉) aus den Verzögerungsmitteln (12, 16) zum Verbinden der Beladungslast (LX, LY) mit dem Generator (2) und ansprechend auf den mindestens einen Lastlösungsbefehl (S₆, S₇) zum Lösen bzw. Freigeben der Ladungslast (LX, LY) aus dem Generator (2); und
Zwangsöffnungsventilmittel (22) zum zwangsweisen bzw. kraftvollen Öffnen des Treibstoffventils (11) während einer zweiten vorbestimmten Zeitperiode ansprechend auf den Lastbeladungsbefehl (S₄, S₅); wobei die Drehzahlstabilisierungsvorrichtung dadurch **gekennzeichnet** ist, daß die Zwangsöffnungsventilmittel (22) mit den Reglermitteln (9) verbunden sind, und zwar zum Unterbrechen eines Normalventilsteuersignals (S₂) aus den Reglermitteln und zum Liefern eines Zwangsöffnungsventilsignals (S₃) zum vollständigen Öffnen des Treibstoffventils (11) unmittelbar, wenn der Lastladungsbefehl (S₄, S₅) erzeugt wird.

2. Drehzahlstabilisierungsvorrichtung nach Anspruch 1, wobei die Lastladungsabfallbeschränkungsmittel (B') weiter folgenden aufweisen:
Grundlastmessungsmittel (24) zum Messen eines Grundlastwerts auf der Grundlage einer Ausgangsgröße des Generators (2) zum Liefern eines Grundlastsignals (S₁₁ in den Fig. 3 und 4), das den Grundlastwert repräsentiert;
Ladungslastvoreinstellungsmittel (28, 29 in Fig. 3) zum Erzeugen von mindestens eines voreingestellten Ladungslastsignals, das proportional den Wert der Ladungslast (LX, LY) darstellt; und
Zwangsöffnungsventilsteuermittel (26, 27, 30-33), um die Zwangsöffnungsventilmittel (22) zu hindern, die normalen Öffnungsventilsteuersignale (S₂) aus den Reglermitteln (9) zu unterbrechen, wenn das voreingestellte Ladungslastsignal kleiner als das Grundlastsignal (S₁₁) ist, und sogar, wenn der Lastladungsbefehl erzeugt wird.

3. Drehzahlstabilisierungsvorrichtung nach Anspruch 1, wobei die Lastladungsabfallbeschränkungsmittel (B') weiter folgendes aufweisen:
Voreinstellungsmittel (28, 29 in Fig. 7) zum Erzeugen von mindestens einem Voreinstellungsgeschwindigkeitssignal, das eine Drehgeschwindigkeit des Kompressors (5) repräsentiert, und zwar entsprechend dem Wert der Ladungslast (LX, LY);
zweite Drehgeschwindigkeitsdetektionsmittel (24'), und zwar gekuppelt mit dem Kompressor (5) zum Erzeugen eines Kompressordrehgeschwindigkeitssignals (S'₁₁ in Fig. 7), und
Zwangsöffnungsventilsteuermittel (26, 27, 30-33), um die Zwangsöffnungsventilmittel (22) zu hindern, das normale Öffnungsventilsteuersignal (S₃ ) von den Reglermitteln (9) zu unterbrechen, wenn das voreingestellte Geschwindigkeitssignal kleiner als das Kompressordrehgeschwindigkeitssignal ist, und sogar wenn der Lastladungsbefehl erzeugt wird.

4. Drehzahlstabilisierungsvorrichtung nach Anspruch 2, wobei die Zwangsöffnungsventilsteuermittel folgendes aufweisen: mindestens einen Komparator (26, 27) zum Vergleichen des voreingestellten Ladungslastsignals mit dem Grundlastsignal (S₁₁) und mindestens eine Logikgatterschaltung (30 und 32, 31 und 33) ansprechend auf die Ausgangsgröße des Komparators, und zwar um den Lastladungsbefehl (S₄, S₅) daran zu hindern, zu den Zwangsöffnungsventilmitteln (22) zu laufen, wenn das voreingestellte Ladungslastsignal kleiner als das Grundlastsignal ist.

5. Drehzahlstabilisierungsvorrichtung nach Anspruch 3, wobei die Zwangsöffnungsventilsteuermittel folgendes aufweisen: mindestens einen Komparator (26, 27) zum Vergleichen des voreingestellten Geschwindigkeitssignals mit dem Kompressordrehgeschwindigkeitssignal (S'₁₁) und mindestens eine Logikgatterschaltung (30 und 32, 31 und 33) ansprechend auf die Ausgangsgröße des Komparators, um den Lastladungsbefehl (S₄, S₅) daran zu hindern, zu den Zwangsöffnungsventilmitteln (22) zu laufen, wenn das voreingestellte Geschwindigkeitssignal kleiner als das Kompressordrehgeschwindigkeitssignal ist.

6. Drehzahlstabilisierungvorrichtung nach einem der Ansprüche 1-5, wobei die Verzögerungsmittel (12, 16) mindestens einen monostabilen Multivibrator, der in einem metastabilen Zustand für die erste vorbestimmte Zeitperiode bleibt, aufweisen.

7. Drehzahlstabilisierungvorrichtung nach Anspruch 6, wobei die Ladungslastverbindungsmittel folgendes aufweisen:
mindestens ein Flip-Flop (13, 17), und zwar verbunden zum Empfang der Ausgangsgröße des monostabilen Multivibrators und zum Empfangen des Lastlösungsbefehls (S₆, S₇), und
mindestens ein Schaltmittel (15, 15a, 19 und 19a), und zwar verbunden zum Empfangen der Ausgangsgröße des Flip-Flops zum Verbinden/Lösen der Ladungslast (LX, LY) mit/von dem Generator (2).

8. Drehzahlstabililsierungsvorrichtung nach einem der Ansprüche 1-7, wobei die Zwangsöffnungsventilmittel (22) einen monostabilen Multivibrator, der in einem metastabilen Zustand für die zweite vorbestimmte Zeitperiode bleibt, aufweisen.

## Revendications

1. Appareil de stabilisation de la vitesse de rotation d'un ensemble (A) à turbine à gaz libre ou à deux arbres, comprenant une génératrice (2) qui peut être connectée à au moins une charge (LX, LY), un arbre (3) d'entraînement de la charge, couplé à une turbine de sortie (1) destinée à entraîner la génératrice (2), un compresseur (5), un arbre (6) d'entraînement de compresseur couplé à une turbine (4) d'entraînement de compresseur destinée à faire tourner le compresseur (5), et un organe de combustion (7) destiné à être alimentée avec du combustible par un tube (10) de combustible et ayant une soupape (11) de combustible et de l'air du compresseur (5) afin qu'il transmette un gaz combustible à travers la turbine (4) d'entraînement du compresseur a la turbine de sortie (1),
l'appareil de stabilisation de vitesse comprenant :
(a) un dispositif (8) de détection de vitesse de rotation pour détecter une vitesse de rotation de l'arbre (3) d'entraînement de la charge afin qu'il donne un signal de vitesse de rotation (S₁),
(b) un dispositif régulateur (9) commandé par le signal de vitesse de rotation (S₁) et destiné à stabiliser la vitesse de rotation par ouverture de la soupape (11) de combustible lorsque la vitesse de rotation est réduite et par fermeture de la soupape (11) de combustible lorsque la vitesse de rotation est accrue, et
(c) un dispositif (B, B') de restriction de réduction à la mise sous charge destiné à limiter la réduction de vitesse à la mise sous charge et comprenant :
un dispositif à retard (12, 16) destiné à transmettre au moins un signal (S₈, S₉) après une première période prédéterminée commençant au moment où au moins une commande de mise sous charge (S₄, S₅) est créée,
un dispositif (13-15, 17-19) de raccordement de charge commandé par ledit signal (S₈, S₉) provenant du dispositif à retard (12, 16) et destiné à connecter la charge (LX, LY) à la génératrice (2) et, en fonction d'au moins une commande de déconnexion de charge (S₆, S₇), pour relacher la charge (LX, LY) de la génératrice (2), et
un dispositif (22) à soupape d'ouverture forcée destiné à ouvrir de manière forcée la soupape (11) de combustible pendant une seconde période prédéterminée à la suite de la commande de mise sous charge (S₄, S₅),
l'appareil de stabilisation de vitesse étant caractérisé en ce que :
le dispositif (22) à soupape d'ouverture forcée est raccordé au dispositif régulateur (9) afin qu'il interrompe un signal normal (S₂) de commande de soupape provenant du dispositif régulateur et transmette un signal (S₃) de soupape à ouverture forcée destiné à ouvrir complètement la soupape de combustible (11) dès que la commande de mise sous charge (S₄, S₅) est créée.

2. Appareil de stabilisation de vitesse selon la revendication 1, dans lequel le dispositif (B') de restriction de réduction de vitesse à la mise sous charge comporte en outre :
un dispositif (24) de mesure de la charge fondamentale de la charge pour mesurer une valeur de charge fondamentale d'après un signal de sortie de la génératrice (2) pour la création d'un signal de charge fondamental (S₁₁ sur les figures 3 et 4) représentant la valeur fondamentale de la charge,
un dispositif (28, 29 sur la figure 3) de préréglage de charge destiné à produire au moins un signal de charge préréglé représentant proportionnellement la valeur de la charge (LX, LY), et
un dispositif (26, 27, 30-33) de commande de soupape d'ouverture forcée destiné à empêcher l'interruption du signal (S₂) de commande de soupape d'ouverture normale provenant du dispositif régulateur (9) par le dispositif (22) à soupape d'ouverture forcée lorsque le signal de charge préréglé est inférieur au signal de charge fondamental (S₁₁) et même lorsque la commande de charge est créée.

3. Appareil de stabilisation de vitesse selon la revendication 1, dans lequel le dispositif (B') de restriction de réduction à la mise à la charge comporte en outre :
un dispositif de préréglage (28, 29 sur la figure 7) destiné à produire au moins un signal de vitesse préréglé représentant une vitesse de rotation du compresseur (5) qui correspond à la valeur de la charge (LX, LY),
un second dispositif (24') de détection de vitesse de rotation couplé au compresseur (5) et destiné à créer un signal de vitesse de rotation du compresseur (S'₁₁ sur la figure 7), et
un dispositif (26, 27, 30-33) de commande de soupape d'ouverture forcée destiné à empêcher l'interruption du signal (S₃) de commande de soupape d'ouverture normale provenant du dispositif régulateur (9) par le dispositif (22) à soupape d'ouverture forcée lorsque le signal préréglé de vitesse est inférieur au signal de vitesse de rotation du compresseur et même lorsque la commande de mise sous charge est créée.

4. Appareil de stabilisation de vitesse selon la revendication 2, dans lequel le dispositif de commande de soupape à ouverture forcée comporte au moins un comparateur (26, 27) destiné à comparer le signal de charge préréglé au signal de charge fondamental (S₁₁), et au moins un circuit porte logique (30 et 32, 31 et 33) commandé par le signal de sortie du comparateur et destiné à empêcher le passage de la commande (S₄, S₅) de charge au dispositif (22) à soupape d'ouverture forcée lorsque le signal de charge préréglé est inférieur au signal de charge fondamentale.

5. Appareil de stabilisation de vitesse selon la revendication 3, dans lequel le dispositif de commande de soupape à ouverture forcée comporte au moins un comparateur (26, 27) destiné à comparer le signal de vitesse préréglé au signal de vitesse de rotation du compresseur (S'₁₁), et au moins un circuit porte logique (30 et 32, 31 et 33) en fonction du signal de sortie du comparateur et destiné à empêcher le passage de la commande de mise sous charge (S₄, S₅) au dispositif (22) à soupape d'ouverture forcée lorsque le signal de vitesse préréglé est inférieur au signal de vitesse de rotation du compresseur.

6. Appareil de stabilisation de vitesse selon l'une quelconque des revendications 1 à 5, dans lequel le dispositif à retard (12, 16) comporte au moins un multivibrateur monostable qui reste à un état métastable pendant la première période prédéterminée.

7. Appareil de stabilisation de vitesse selon la revendication 6, dans lequel le dispositif de raccordement de charge comporte :
au moins une bascule (13, 17) connectée afin qu'elle reçoive le signal de sortie du multivibrateur monostable et la commande de déconnexion de charge (S₆, S₇), et
au moins un dispositif de commutation (15 et 15a, 19 et 19a) connecté afin qu'il reçoive le signal de sortie de la bascule pour assurer la connexion de la charge (LX, LY) à la génératrice (2) ou sa déconnexion de celle-ci.

8. Appareil de stabilisation de vitesse selon l'une quelconque des revendications 1 à 7, dans lequel le dispositif (22) à soupape à ouverture forcée comprend un multivibrateur monostable qui reste à un état métastable pendant la seconde période prédéterminée.
